# NEUE EUROPÄISCHE PATENTSCHRIFT

(11) **EP 2 897 781 B2**
(45) Veröffentlichungstag und Bekanntmachung des Hinweises auf die Entscheidung über den Einspruch: **27.09.2023**
(45) Hinweis auf die Patenterteilung: 23.11.2016
(21) Anmeldenummer: 13763257.6
(22) Anmeldetag: 18.09.2013
(51) Int. Cl.: B29C 64/153, B33Y 30/00, B22F 10/00, B22F 12/00, B29C 37/00

(54) **VORRICHTUNG UND VERFAHREN ZUM LAGENWEISEN HERSTELLEN EINES DREIDIMENSIONALEN GEGENSTANDES**
DEVICE AND PROCESS FOR THE PRODUCTION OF A THREE-DIMENSIONAL OBJECT IN LAYERS
DISPOSITIF ET PROCEDE POUR FABRIQUER PAR COUCHES UN OBJET TRIDIMENSIONNEL

(30) Priorität: 18.09.2012 DE 102012018366
(43) Veröffentlichungstag der Anmeldung: 29.07.2015
(73) Patentinhaber: EOS GmbH Electro Optical Systems, 82152 Krailling (DE)
(72) Erfinder: HEUGEL, Martin, 86899 Landsberg am Lech (DE); FEY, Georg, 80336 München (DE); BAUMANN, Andreas, 82166 Gräfelfing (DE); KLINGEL, Hans, 71696 Möglingen (DE)
(74) Vertreter: Prüfer & Partner mbB Patentanwälte · Rechtsanwälte
(86) Internationale Anmeldenummer: PCT/EP2013/069361
(87) Internationale Veröffentlichungsnummer: WO 2014/044705

(56) Entgegenhaltungen:
- EP-A1- 0 734 842
- WO-A1-93/08928
- WO-A1-93/08928
- WO-A2-02/28568
- DE-A1- 19 846 478
- DE-A1- 19 937 260
- US-B1- 6 824 714
- GIBSON et al.: "Additive Manufacturing Technologies, Rapid Prototyping to Direct Digital Manufacturing" In: Gibson et al: "Additive Manufacturing Technologies", 2010, Springer pages 1-472,
- "SLS Systems User's Guide", SLS Systems, August 2004 (2004-08), page 82,
- A. Gebhardt: In: "Rapid Prototyping", 1996 pages 116-118,

## Beschreibung

### Technisches Gebiet

Die Erfindung bezieht sich auf eine Vorrichtung zum lagenweisen Herstellen eines dreidimensionalen Gegenstandes und insbesondere auf das Verpacken des fertig hergestellten Gegenstandes sowie des diesen umgebenden unverfestigten Pulvers.

### Stand der Technik

Beim lagenweisen Herstellen eines dreidimensionalen Körpers aus Pulver wird das zu verfestigende Pulver in einem Vorratbehälter bereit gehalten. Aus diesem Vorratsbehälter wird eine gewisse Menge Pulver zunächst in einen sogenannten Beschichter gegeben und mittels dieses Beschichters wird das Pulver lagenweise auf eine Tragerplatte aufgetragen.

Die Oberfläche der aufgetragenen Lage wird Baufeld genannt. Durch eine Energiequelle werden vorbestimmte Bereiche der aufgetragenen Pulverlage verfestigt. Diese verfestigten Bereiche entsprechen dem jeweiligen Querschnitt des herzustellenden Objektes innerhalb der eben aufgetragenen Lage.

Anschließend wird eine neue Lage Pulver aufgetragen und die dem jeweiligen Querschnitt des herzustellenden Objektes entsprechenden Bereiche dieser neuen Lage werden verfestigt. Üblicherweise erfolgt vor dem Auftragen der neuen Lage ein Absenken der Trägerplatte um einen der Dicke dieser Lage entsprechenden Betrag. Das Baufeld befindet sich somit immer auf der gleichen Ebene.

Der Raum in welchen die Trägerplatte und die auf ihr befindlichen Lagen absenkbar sind, wird in der Fachsprache Bauraum genannt. Dieser Bauraum ist seitlich durch Wandungen begrenzt. Der Boden des Bauraumes wird durch die Trägerplatte gebildet.

Diese Folge von Beschichten, Verfestigen und Absenken setzt sich fort, bis das zu erstellende Objekt komplett hergestellt ist. Das hergestellte Objekt befindet sich nun umgeben von nicht verfestigtem Pulver im Bauraum.

Aus dem Stand der Technik DE19846478A1 ist es bekannt, den gesamten Bauraum einschließlich der Wandungen und der Trägerplatte aus der Lasersintermaschine zu entnehmen.

Aus der WO9308928, die eine Vorrichtung gemäß dem Oberbegriff des Anspruchs 1 offenbart, ist ein hutartiges Behältnis über dem Baufeld bekannt, mittels welchem der hergestellte Gegenstand und das ihn umgebende unverfestigte Pulver aus der Baukammer entfernt werden kann. Unter hutartigem Behältnis ist ein Gegenstand zu verstehen, der ein Volumen umgibt und an einer Seite offen ist, wobei die Öffnung üblicherweise nach unten zeigt.

Nachteilig bei dem Stand der Technik gemäß WO9308928 ist die Tatsache, dass kein Verschluss für das hutartige Behältnis offenbart ist.

Sofern es sich bei dem Pulver um ein sehr werthaltiges Pulver, etwa ein Edelmetallpulver handelt, hat ein Behältnis ohne Verschluss den Nachteil, dass Pulver unkontrolliert verloren gehen kann.

Auch kann es bei der Verwendung eines Behälters ohne Verschluss zu einer Kontamination der Innenbereiche der Vorrichtung mit Pulver kommen. Dies ist insbesondere dann nachteilig, wenn verschiedene Arten von Pulver in ein und der selben Maschine nacheinander verwendet werden, da Reste des zuvor verwendeten Pulvers die Eigenschaften des später auf dieser Maschine hergestellten Gegenstandes nachteilig beeinflussen können.

### Technische Aufgabe

Es ist Aufgabe der Erfindung, eine Vorrichtung zu schaffen, bei welcher der hergestellte Gegenstand und das ihn umgebende Pulver in einem verschlossenem Behälter aus der Lasersintermaschine entnehmbar ist, ohne dass Pulver aus dem Behältnis entweicht.

### Technische Lösung

Diese Aufgabe wird erfindungsgemäß gelöst, indem der hergestellte Gegenstand und das ihn umgebende Pulver zusammen mit einem Verschlusselement aus dem Bauraum heraus in das hutartige Behältnis einschiebbar ist und anschließend das Behältnis mit einem Verschlusselement verschließbar ist.

Die Überlegungen, die zum Entstehen der vorliegenden Erfindung führten gingen von der Erkenntnis aus, dass aufgrund der nach unten gerichteten Öffnung des Behältnisses es in vorteilhafter Weise möglich ist in einem Arbeitsschritt die hergestellten Gegenstände und das diese umgebende Pulver in das Behältnis zu verpacken und anschließend das Behältnis sicher zu verschließen. Hierzu ist in erfinderischer Weise eine Anordnung gewählt, bei welcher als Verschlusselement eine Platte dient, die sich direkt auf der Trägerplatte und damit gleichzeitig unterhalb des hergestellten Gegenstandes und befindet.

Das Verschlusselement hat bevorzugt einen Querschnitt, welcher der Öffnung des hutartigen Behältnis entspricht.

In einer Weiterbildung der Erfindung wird die Grundplatte, welche bei der lagenweisen Herstellung von Gegenständen aus Metall zwingend notwendig ist als Verschlusselement für das hutartige Behältnis verwendet. Eine solche Grundplatte ist in der EP 0734 842 A1 beschrieben, worauf als Referenz Bezug genommen wird.

### Vorteilhafte Wirkungen

Durch die Anordnung des Verschlusselements auf der Trägerplatte und somit unterhalb des hergestellten Gegenstandes im Baufeld ist es möglich mit dem Antrieb, der auch für das Absenken der Trägerplatte verwendet wird das Verschlusselement in das hutartige Behältnis einzuschieben.

Da die Öffnung des hutartigen Behältnis nach unten zeigt, kann durch einfaches Anheben der gesamten Einheit von Verschlusselement, hergestelltem Bauteil und umgebendem nicht verfestigten Pulver in einem Vorgang das Verpacken des hergestellten Gegenstandes samt des nicht verfestigten Pulvers und das Verschließen des Behältnis erfolgen.

Bei der Anwendung der Erfindung beim lagenweisen Herstellen von Gegenständen aus Metall kann die Grundplatte in vorteilhafter Weise gleichzeitig als Verschlusselement dienen, wodurch in vorteilhafter Weise auf ein separates Verschlusselement verzichtet werden kann.

### Kurze Beschreibung der Zeichnungsfiguren

Nachfolgend wird die Erfindung anhand von drei Zeichnungen näher erläutert.

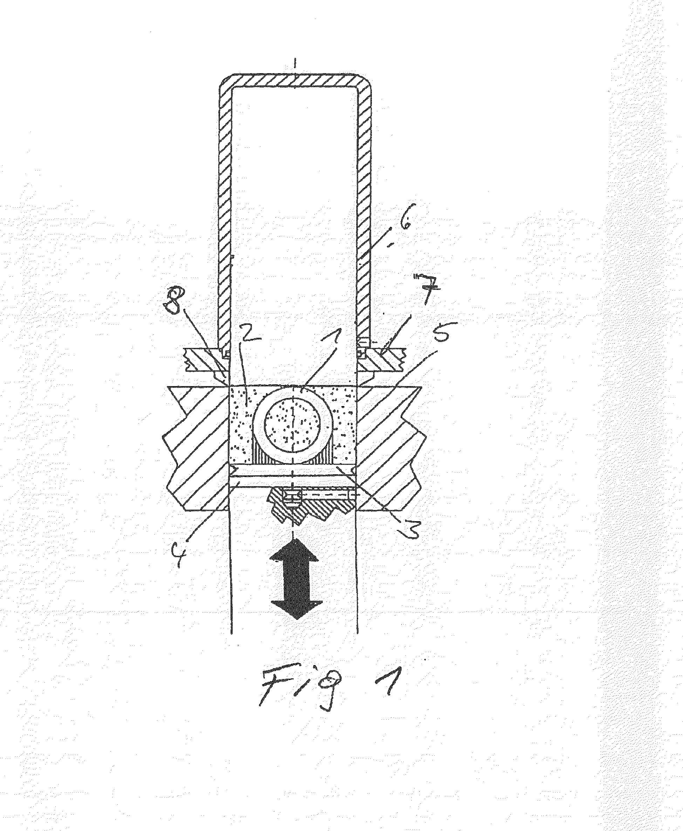

Die Figur 1 zeigt den in geschnittener Darstellung eine erfindungsgemäße Vorrichtung. Die Schnittlinie verläuft etwa mittig durch das Baufeld.

Der hergestellte Gegenstand 1 ist umgeben von einem Pulverbett 2 auf einer Grundplatte 3 in bekannter Weise aufgebaut.

Die Grundplatte 3 ihrerseits ist mit einer Trägerplatte 4 verbunden. Die Verbindung zwischen der Grundplatte 3 und der Trägerplatte 4 ist lösbar gestaltet. In der gezeigten Darstellung ist die Art der lösbaren Verbindung nicht detailliert abgebildet, da es für das Funktionieren der vorliegenden Erfindung unerheblich ist, welche Art der lösbaren Verbindung zur Anwendung kommt. Es sind sowohl formschlüssige, als auch kraftschlüssige Verbindungen verwendbar. (Klebe- Vakuum- oder Bajonet-Verbindung) Die Trägerplatte 4 ist mittels eines nicht dargestellten Antriebs auf und ab bewegbar.

Oberhalb der Bauebene 5 ist ein Behältnis 6 angebracht. Das Behältnis 6 ist an seiner zur Bauebene zeigenden Seite offen und hat einen Querschnitt, welcher dem Querschnitt des Baufeldes entspricht. Das Behältnis 6 ist so auf der Bauebene 5 positioniert, dass seine Innenwandung mit der Innenwandung des Bauraumes fluchtet.

Das Behältnis 6 sitzt in einer Halterung 7, welche durch einen nicht gezeigten Antrieb parallel zur Bauebene 5 verfahrbar ist. Das Behältnis 6 befindet sich während des eigentlichen Herstellungsvorganges, ausserhalb des Strahlengangs der Energiequelle welche für die Verfestigung des Pulvers dient.

Nach Beendigung des Herstellungsvorgangs wird das Behältnis über dem Baufeld positioniert. Zur Abdichtung ist eine umlaufende Dichtung 8 vorgesehen, welche den Spalt zwischen der Halterung 7 und der Bauebene 5 abdichtet.

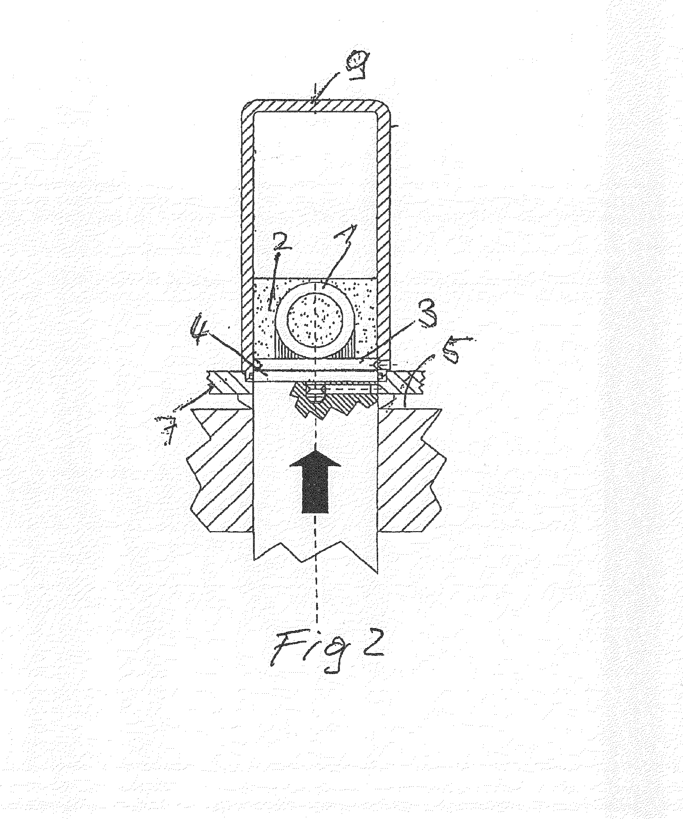

Die Figur 2 zeigt die aus Figur 1 bekannten Elemente, wobei die Grundplatte 3 und das auf dieser Grundplatte 3 hergestellte Objekt 1 zusammen mit dem Pulver 2 nach oben in das Behältnis 6 geschoben ist. Durch das Einschieben kann im Behältnis 6 eine Druckerhöhung auftreten, welche gegebenenfalls durch ein Ventil 9 kontrolliert abgelassen werden kann.

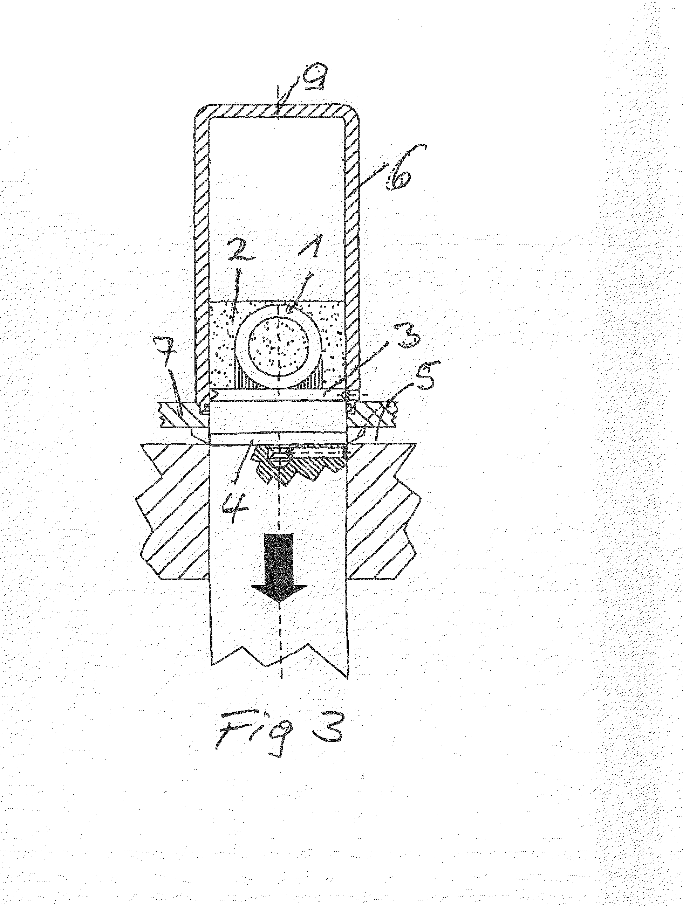

Die Figur 3 zeigt die Situation, nachdem die Trägerplatte wieder nach unten verfahren wurde. Hierzu wurde zuvor die lösbare Verbindung zwischen Grundplatte 3 und Trägerplatte 4 gelöst. Die Grundplatte 3 verblieb aufgrund der Reibung zwischen dem Aussenrand der Grundplatte 4 und der Innenwand des Behältnisses 6 in diesem.

Die Grundplatte 3 ist so weit in das Behältnis 6 eingeschoben, dass der untere Rand des Behältnisses 6 umgebördelt werden kann. Dieses Umbördeln bewirkt zuverlässig, dass die Grundplatte 3 mit dem hergestellten Objekt 1 oder das Pulver 2 während eines weiteren Transports in dem Behältnis 6 verbleibt.

In einer bevorzugten, nicht näher dargestellten Ausführungsform der vorliegenden Erfindung ist keine separate Trägerplatte vorgesehen. Der Antrieb, der in den vorhergehenden Ausführungsformen für das Absenken der Trägerplatte vorgesehen ist, greift vielmehr direkt an dem Verschlusselement an, so dass eine lösbare Verbindung zwischen dem Verschlusselement und dem Antrieb besteht. Um das Behältnis nach Herstellung des Objektes mitsamt diesem aus dem Bauraum heraus zu entfernen, wird das Behältnis mit dem Verschlusselement verschlossen und anschließend die lösbare Verbindung zwischen dem Verschlusselement und dem Antrieb gelöst.

### Gewerbliche Anwendbarkeit

Die Erfindung ist gewerblich anwendbar bei der lagenweisen Herstellung von Gegenständen.

## Patentansprüche

1. Vorrichtung zum lagenweisen Herstellen eines dreidimensionalen Objekts aus einem pulverförmigen Ausgangsmaterial mit einem Bauraum, in dem das dreidimensionale Objekt (1) hergestellt wird, mit einem Behältnis (6) zur Aufnahme des hergestellten Objekts (1) und des dieses Objekt (1) umgebenden unverfestigten Pulvers und mit einem Verschlusselement,
wobei das Behältnis (6) ein Volumen umgibt und an seiner nach unten weisenden Seite offen ist,
wobei die offene Seite des Behältnisses (6) durch das Verschlusselement verschließbar ist und
wobei das hergestellte Objekt (1) und das dieses Objekt (1) umgebende unverfestigte Pulver (2) zusammen mit dem Verschlusselement aus dem Bauraum heraus von unten durch die offene Seite in das Behältnis (6) einschiebbar ist.

2. Vorrichtung nach Anspruch 1,
**dadurch gekennzeichnet, dass**
das Verschlusselement als eine Platte ausgebildet ist, deren Fläche im wesentlichen der Fläche der offenen Seite des Behältnisses (6) entspricht.

3. Vorrichtung nach Anspruch 1 oder 2,
**dadurch gekennzeichnet, dass**
das Verschlusselement das Element ist, welcher beim lagenweisen Herstellen eines dreidimensionalen Objekts (1) aus pulverförmigen Metall als Grundplatte (3) dient.

4. Vorrichtung nach einem der vorangegangenen Ansprüche,
**dadurch gekennzeichnet, dass**
das Verschlusselement lösbar auf einer Trägerplatte (4) der Vorrichtung zum lagenweisen Herstellen des dreidimensionalen Objekts (1) angeordnet ist.

5. Vorrichtung nach einem der Ansprüche 1 bis 3,
**dadurch gekennzeichnet, dass**
der Antrieb, durch welchen das Objekt während des lagenweisen Herstellens schrittweise abgesenkt wird, direkt an dem Verschlusselement angreift.

6. Verfahren zum Entnehmen des hergestellten dreidimensionalen Objekts und des dieses Objekt umgebenden unverfestigten Pulvers in einer Vorrichtung nach einem der vorangegangenen Ansprüche, wobei
das hergestellte dreidimensionale Objekt (1) und das dieses Objekt umgebende unverfestigte Pulver (2) zusammen mit dem Verschlusselement aus dem Bauraum heraus von unten in das Behältnis (6) eingeschoben werden.

7. Verfahren zum Entnehmen des hergestellten dreidimensionalen Objekts und des dieses Objekt umgebenden unverfestigten Pulvers nach Anspruch 6,
**dadurch gekennzeichnet, dass**
das Behältnis (6) durch das Verschlusselement verschlossen wird.

8. Verfahren zum Entnehmen des hergestellten dreidimensionalen Objekts und des dieses Objekt umgebenden unverfestigten Pulvers in einer Vorrichtung nach einem der Ansprüche 1 bis 4 oder in einem Verfahren nach einem der Ansprüche 6 oder 7,
**dadurch gekennzeichnet, dass**
das Verschlusselement von einer Trägerplatte (4) gelöst wird.

9. Verfahren zum Entnehmen des hergestellten dreidimensionalen Objekts und des dieses Objekt umgebenden unverfestigten Pulvers in einer Vorrichtung nach einem der Ansprüche 1 bis 3 oder 5 oder in einem Verfahren nach einem der Ansprüche 6 oder 7,
**dadurch gekennzeichnet, dass** der Antrieb direkt an dem Verschlusselement angreift.

10. Verfahren zum Entnehmen des hergestellten dreidimensionalen Objekts und des dieses Objekt umgebenden unverfestigten Pulvers nach einem der Ansprüche 6 bis 9,
**dadurch gekennzeichnet, dass**
das Behältnis (6) nach oben aus der Vorrichtung entnommen wird.

## Claims

1. Device for layer-wise manufacturing a three-dimensional object from a source material in powder form with a construction space, in which the three-dimensional object (1) is manufactured, with a container (6) for accommodating the manufactured object (1) and the non-solidified powder surrounding this object (1), and with a closure element,
wherein the container (6) surrounds a volume and is open on its downward facing side,
wherein the open side of the container (6) is closable by the closure element, and
wherein the manufactured object (1) and the non-solidified powder (2) surrounding this object (1) is insertable together with the closure element out of the construction space from below through the open side into the container (6).

2. Device according to claim 1,
**characterized in that**
the closure element is formed as a plate, the area of which substantially corresponds to the area of the open side of the container (6).

3. Device according to claim 1 or 2,
**characterized in that**
the closure element is the element, which serves as a base plate (3) during layer-wise manufacturing of a three-dimensional object (1) from a metal in powder form.

4. Device according to any one of the preceding claims,
**characterized in that**
the closure element is detachably arranged on a carrier plate (4) of the device for layer-wise manufacturing the three-dimensional object (1).

5. Device according to any one of claims 1 through 3,
**characterized in that**
the drive, by which the object is lowered step by step during the layer-wise manufacturing, directly engages the closure element.

6. Method for removing the manufactured three-dimensional object and the non-solidified powder surrounding this object in a device according to any one of the preceding claims, wherein
the manufactured three-dimensional object (1) and the non-solidified powder (2) surrounding this object are inserted together with the closure element out of the construction space from below into the container (6).

7. Method for removing the manufactured three-dimensional object and the non-solidified powder surrounding this object according to claim 6,
**characterized in that**
the container (6) is closed by the closure element.

8. Method for removing the manufactured three-dimensional object and the non-solidified powder surrounding this object in a device according to any one of claims 1 through 4 or in a method according to any one of claims 6 or 7, **characterized in that**
the closure element is released from a carrier plate (4).

9. Method for removing the manufactured three-dimensional object and the non-solidified powder surrounding this object in a device according to any one of claims 1 through 3 or 5 or in a method according to any one of claims 6 or 7, **characterized in that** the drive directly engages the closure element.

10. Method for removing the manufactured three-dimensional object and the non-solidified powder surrounding this object according to any one of claims 6 through 9,
**characterized in that**
the container (6) is removed from the device in an upward direction.

## Revendications

1. Dispositif pour fabriquer par couches un objet tridimensionnel à partir d'une matière sous forme de poudre avec un espace de construction, dans lequel l'objet tridimensionnel (1) est fabriqué, avec un récipient (6) pour loger l'objet fabriqué (1) et la poudre non fixée entourant cet objet (1), et avec un élément de fermeture,
le récipient (6) entourant un volume et étant ouvert au niveau de son côté orienté vers le bas,
dans lequel le côté ouvert du récipient (6) peut être fermé par l'élément de fermeture, et
dans lequel l'objet fabriqué (1) et la poudre non fixée (2) entourant cet objet (1) pouvant, conjointement avec l'élément de fermeture, être insérés dans le récipient (6) par en bas à travers le côté ouvert, en sortant de l'espace de construction.

2. Dispositif selon la revendication 1,
**caractérisé en ce que**
l'élément de fermeture est réalisé sous la forme d'une plaque dont la surface correspond pour l'essentiel à la surface du côté ouvert du récipient (6).

3. Dispositif selon la revendication 1 ou 2, **caractérisé en ce que**
l'élément de fermeture est l'élément servant de plaque de fond (3) lors de la fabrication par couches d'un objet tridimensionnel (1) à partir d'un métal sous forme de poudre.

4. Dispositif selon l'une des revendications précédentes, **caractérisé en ce que**
l'élément de fermeture est disposé de façon amovible sur une plaque de support (4) du dispositif servant à fabriquer par couches l'objet tridimensionnel (1).

5. Dispositif selon l'une des revendications 1 à 3, **caractérisé en ce que**
l'entraînement à travers lequel l'objet est abaissé progressivement pendant la fabrication par couches est directement accroché à l'élément de fermeture.

6. Procédé de retrait de l'objet tridimensionnel fabriqué et de la poudre non fixée entourant cet objet dans un dispositif selon l'une des revendications précédentes,
l'objet tridimensionnel fabriqué (1) et la poudre non fixée (2) entourant cet objet étant, conjointement avec l'élément de fermeture, insérés par en bas dans le récipient (6), en sortant de l'espace de construction.

7. Procédé de retrait de l'objet tridimensionnel fabriqué et de la poudre non fixée entourant cet objet selon la revendication 6,
**caractérisé en ce que**
le récipient (6) est fermé par l'élément de fermeture.

8. Procédé de retrait de l'objet tridimensionnel fabriqué et de la poudre non fixée entourant cet objet dans un dispositif selon l'une des revendications 1 à 4 ou dans un procédé selon l'une des revendications 6 ou 7,
**caractérisé en ce que**
l'élément de fermeture est détaché d'une plaque de support (4).

9. Procédé de retrait de l'objet tridimensionnel fabriqué et de la poudre non fixée entourant cet objet dans un dispositif selon l'une des revendications 1 à 3 ou 5 ou dans un procédé selon l'une des revendications 6 ou 7,
**caractérisé en ce que** l'entraînement s'accroche directement à l'élément de fermeture.

10. Procédé de retrait de l'objet tridimensionnel fabriqué et de la poudre non fixée entourant cet objet selon l'une des revendications 6 à 9,
**caractérisé en ce que**
le récipient (6) est retiré du dispositif par le haut.
